# EUROPÄISCHE PATENTSCHRIFT

(11) **EP 2 768 714 B1**
(45) Veröffentlichungstag und Bekanntmachung des Hinweises auf die Patenterteilung: **08.07.2015**
(21) Anmeldenummer: 12766881.2
(22) Anmeldetag: 12.09.2012
(51) Int. Cl.: B62D 1/16

(54) **LENKSPINDELLAGEREINHEIT**
STEERING SHAFT BEARING UNIT
UNITÉ PALIER D'ARBRE DE DIRECTION

(30) Priorität: 19.10.2011 DE 102011054597
(43) Veröffentlichungstag der Anmeldung: 27.08.2014
(73) Patentinhaber: ThyssenKrupp Presta Aktiengesellschaft, 9492 Eschen (LI)
(72) Erfinder: SCHNITZER, Rony, 9487 Gamprin (LI)
(74) Vertreter: Fechner, Thomas
(86) Internationale Anmeldenummer: PCT/EP2012/003820
(87) Internationale Veröffentlichungsnummer: WO 2013/056771

(56) Entgegenhaltungen:
- EP-A1- 0 502 761
- EP-A1- 0 770 537
- GB-A- 2 431 980
- JP-A- 10 007 003
- JP-A- 2002 302 046

## Beschreibung

Die vorliegende Erfindung betrifft eine Lenkspindellagereinheit zur drehbaren Lagerung einer Lenkspindel einer Lenksäule für ein Kraftfahrzeug, wobei die Lenkspindellagereinheit ein Mantelblech aufweist, welches zumindest einen umfangsgeschlossenen Bereich zur Aufnahme zumindest eines Lagers zur drehbaren Lagerung der Lenkspindel und zumindest einen Befestigungsbereich zur Befestigung der Lenkspindellagereinheit an einem Konsolenteil der Lenksäule aufweist, wobei das Mantelblech in seinem Befestigungsbereich eine von zumindest zwei einander gegenüberliegenden, jeweils frei auskragenden Befestigungsstegen begrenzte Öffnung aufweist, wobei die Befestigungsstege Teil des Mantelblechs sind, und die frei auskragenden Befestigungsstege des Mantelblechs jeweils zumindest eine Durchführöffnung zum Hindurchführen eines Spannbolzens der Lenksäule aufweisen.

Weiters betrifft die Erfindung auch eine Lenksäule mit einer solchen Lenkspindellagereinheit sowie verschiedene Verfahren zur Herstellung der Lenkspindellagereinheit.

Aus der EP 1 535 824 B1, der EP 1 547 902 A1, der EP 1 553 002 B1, der US 7,350,813 B2 und der JP 10-7003 sind Lenkspindellagereinheiten bekannt, welchen allen gemeinsam ist, dass die Lenkspindellagereinheit im Befestigungsbereich aufgeweitet wird, um geeignete Befestigungsflächen zur Befestigung der Lenkspindellagereinheit an einem Konsolenteil und damit an einer Karosserie eines Kraftfahrzeugs zur Verfügung zu stellen. Das Aufweiten des Mantelblechs im Befestigungsbereich hat zwei wesentliche Nachteile. Zum einen kommt es durch das Aufweiten zu einer Ausdünnung und damit zu einer Schwächung des Mantelblechs in diesem Bereich. Zum anderen ist der Vorgang der Aufweitung des Mantelblechs mit einem erhöhten technischen Aufwand verbunden.

Aus der EP 0 770 537 A1 ist eine gattungsgemäße Lenkspindellagereinheit bekannt, welche frei auskragende Befestigungsstege mit Durchführöffnungen zum Hindurchführen des Spannbolzens aufweist. Aufgrund des ebenen, flächigen Anliegens der Befestigungsstege am Konsolenteil sind die übertragbaren Kräfte und die Steifigkeit der Konstruktion limitiert. Die Fertigung des Mantelrohres ist aufgrund des komplexen Aufbaus aufwendig und teuer.

Aufgabe der Erfindung ist es daher, eine gattungsgemäße Lenkspindellagereinheit zur Verfügung zu stellen, die möglichst einfach und preiswert produziert werden kann und trotzdem hohe Anforderungen an die Steifigkeit erfüllt.

Dies wird erfindungsgemäß durch eine Lenkspindellagereinheit gemäß Patentanspruch 1 erreicht.

Es ist somit vorgesehen, dass zumindest einer der, vorzugsweise beide, Befestigungsstege zumindest eine Lenkspindellagereinheitsicke aufweist bzw. aufweisen, und dass die Durchführöffnung zum Hindurchführen des Spannbolzens in der Lenkspindellagereinheitsicke angeordnet ist.

Günstig ist es in diesem Zusammenhang, wenn die Befestigungsstege über zu ihnen benachbarte Bereiche des Mantelblechs, vorzugsweise nach außen, überstehen.

Eine solche Lenkspindellagereinheit kann auf verschiedene Arten und Weisen sehr kostengünstig hergestellt werden. Trotzdem werden die allgemein gestellten Anforderungen an die Steifigkeit von der Lenkspindellagereinheit ohne Weiteres erfüllt.

Besonders bevorzugte Ausgestaltungsformen der erfindungsgemäßen Lenkspindellagereinheit sehen vor, dass das Mantelblech aus einem einstückigen Blech geformt ist. Mit anderen Worten ist das Mantelblech in diesen Varianten aus einem einzigen Blech geformt. Einstückig bedeutet dabei, dass das Blech als solches als ein Teil hergestellt wurde, also nicht aus verschiedenen Teilblechen zusammengesetzt bzw. zusammengeschweißt wurde. Zur Herstellung einer solchen Lenkspindellagereinheit sieht ein bevorzugtes Verfahren vor, dass das Mantelblech aus einem, bzw. eben einem einzigen, einstückigen Blech durch Umformen, vorzugsweise Biegen, ausgeformt wird. Besonders bevorzugt ist dabei vorgesehen, wenn anschließend an das Umformen, vorzugsweise Biegen, einander gegenüberliegende Stirnseiten des einstückigen Blechs zur Ausbildung des umfangsgeschlossenen Bereichs miteinander verbunden, vorzugsweise verschweißt oder verstemmt, werden.

Ein alternatives Herstellungsverfahren für eine erfindungsgemäße Lenkspindellagereinheit sieht vor, dass das Mantelblech aus einem umfangsgeschlossenen Rohrkörper hergestellt wird, indem eine Wand des Rohrkörpers im Befestigungsbereich aufgeschnitten und die frei auskragenden Befestigungsstege und die von den Befestigungsstegen begrenzte Öffnung durch Umformen, vorzugsweise Umbiegen, von durch das Aufschneiden begrenzten Bereichen der Wand ausgebildet werden.

Anstelle der einstückigen Ausführung des Mantelblechs kann aber auch vorgesehen sein, dass das Mantelblech aus mehreren Blechteilen zusammengesetzt, vorzugsweise zusammengeschweißt, ist. Es können also auch Verfahren zur Herstellung einer erfindungsgemäßen Lenkspindellagereinheit eingesetzt werden, bei denen das Mantelblech aus mehreren vorgeformten Blechteilen bzw. Blechumformteilen zusammengesetzt, vorzugsweise zusammengeschweißt, wird. Das Mantelblech, sei es nun einstückig ausgebildet oder aus verschiedenen Blechteilen zusammengesetzt, besteht günstigerweise aus Metall, vorzugsweise aus Stahl.

Bevorzugte Ausgestaltungsformen der Erfindung sehen vor, dass das Mantelblech zumindest zwei umfangsgeschlossene Bereiche zur Aufnahme jeweils zumindest eines Lagers zur drehbaren Lagerung der Lenkspindel aufweist und der Befestigungsbereich zwischen den umfangsgeschlossenen Bereichen angeordnet ist. Besonders günstig herzustellende Varianten sehen dabei vor, dass es sich um genau zwei umfangsgeschlossene Bereiche zur Aufnahme jeweils zumindest eines Lagers handelt. Der bzw. die umfangsgeschlossenen Bereiche des Mantelbfechs können rohrförmig ausgebildet sein. Es kann aber auch vorgesehen sein, dass das Mantelblech nur genau einen umfangsgeschlossenen Bereich zur Aufnahme zumindest eines Lagers zur drehbaren Lagerung der Lenkspindel aufweist. Ein zweites Lager für die Lenkspindel kann dann z.B. in einer Lenkkraftunterstützungseinheit oder in dem Konsolenteil der Lenksäule angeordnet sein.

Der Vollständigkeit halber wird darauf hingewiesen, dass besonders einfach herzustellende erfindungsgemäße Lenkspindellagereinheiten vorsehen, dass das Mantelblech in seinem Befestigungsbereich eine von genau zwei einander gegenüberliegenden jeweils frei auskragenden Befestigungsstegen begrenzte Öffnungen aufweist, wobei diese Befestigungsstege wiederum Teil des Mantelblechs sind. Zur zusätzlichen Aussteifung der Befestigungsstege kann vorgesehen sein, dass die Befestigungsstege, vorzugsweise an ihren frei auskragenden Enden, mittels eines gesonderten Verbindungsbleches miteinander verbunden sind. Besonders bevorzugte Varianten sehen dabei vor, dass das Verbindungsblech einen v-förmigen Querschnitt aufweist. Das gesonderte Verbindungsblech kann z.B. mittels Schweißen an den Befestigungsstegen und insbesondere an deren frei auskragenden Enden befestigt sein. Die Befestigung des gesonderten Verbindungsblechs an den Befestigungsstegen, insbesondere an deren frei auskragenden Enden, erfolgt bevorzugt in Form einer dauerhaften Verbindung. Unter dauerhafter Verbindung sind grundsätzlich all diejenigen Arten von Verbindungen zu verstehen, bei denen es nicht vorgesehen ist, die Verbindung nur zeitweise bzw. lösbar auszugestalten. Im vorliegenden Fall soll das Verbindungsblech dauerhaft, also über die gesamte Zeit der Benutzung der Lenkspindellagereinheit entsprechend an den Befestigungsstegen bzw. deren frei auskragenden Enden befestigt sein. Beispiele für dauerhafte Verbindungen sind neben der bereits genannten Verschweißung, Bördelungen, Verstemmungen und dergleichen. Auch ein dauerhaftes Einklemmen ist möglich. Mit anderen Worten könnte man bei dieser dauerhaften Verbindung auch von einer permanenten Verbindung sprechen. Das Verbindungsblech überträgt die Presskräfte, die auf die beiden Lagerteilsicken von der Feststelleinrichtung aufgebracht werden, zumindest zum Teil.

Die frei auskragenden Befestigungsstege des Mantelblechs weisen jeweils zumindest eine Durchführöffnung zum Hindurchführen eines an sich bekannten Spannbolzens der Lenksäule auf. Zur Erhöhung der Steifigkeit im Bereich der Befestigungsstege ist vorgesehen, dass zumindest einer der, vorzugsweise beide, Befestigungsstege zumindest eine Lenkspindellagereinheitsicke aufweist bzw. aufweisen. Es ist erfindungsgemäß vorgesehen, dass die Durchführöffnung zum Hindurchführen des Spannbolzens in der Lenkspindellagereinheitsicke angeordnet ist. Günstigerweise weist jeder frei auskragende Befestigungssteg genau eine Lenkspindellagereinheitsicke auf, in der jeweils eine Durchführöffnung angeordnet ist. Bevorzugt handelt es sich bei den Durchführöffnungen um Langlöcher. Es ist weiters von Vorteil, wenn die Durchführöffnung jeweils im Sickengrund der Lenkspindellagereinheitsicke angeordnet ist. Besonders vorteilhaft ist es, wenn die Durchführöffnung etwa symmetrisch zwischen den den Sickengrund begrenzenden etwa parallel verlaufenden Seitenwänden oder Rändern im Sickengrund angeordnet ist.

Bei den Lenkspindellagereinheitsicken handelt es sich günstigerweise um sogenannte Innensicken. Diese sind dadurch gekennzeichnet, dass die Lenkspindellagereinheitsicke bzw. die Lenkspindellagereinheitsicken als in Richtung in einen Innenraum des Befestigungsbereiches hinein vertiefte Sicke bzw. Sicken ausgebildet ist bzw. sind.

Bei bevorzugten Ausgestaltungsformen der Erfindung ist vorgesehen, dass die Lenkspindellagereinheit, vorzugsweise das Mantelblech, zumindest bereichsweise, vorzugsweise vollständig, einwandig ausgeführt ist. Dies gilt insbesondere für den Befestigungsbereich aber bevorzugt auch für den umfangsgeschlossenen Bereich zur Aufnahme zumindest eines Lagers zur drehbaren Lagerung der Lenkspindel.

Günstigerweise handelt es sich beim Mantelblech bzw. bei den Blechteilen aus denen das Mantelblech geformt wird, um Metallbleche. Bevorzugt bestehen diese aus Stahl, Aluminium, Magnesium oder Legierungen, die diese Metalle enthalten.

Es ist diesem Zusammenhang darauf hinzuweisen, dass es sich bei der oder den Durchführöffnung(en) zum Hindurchführen des Spannbolzens durch den oder die Befestigungssteg(e) und bei der Öffnung im Befestigungsbereich des Mantelblechs, welche von den zumindest zwei einander gegenüberliegenden, jeweils frei auskragenden Befestigungsstegen begrenzt ist, um voneinander verschiedene Aussparungen bzw. Öffnungen handelt. In einem besonders bevorzugten Fall, umfasst die Lenkspindellagereinheit genau zwei Lenkspindellagereinheitssicken, die jeweils in den frei auskragenden Befestigungsbereichen in der Nähe der freien Enden angeordnet sind.

Neben der Lenkspindellagereinheit an sich betrifft die Erfindung auch eine Lenksäule für ein Kraftfahrzeug mit einem zur Befestigung der Lenksäule an einer Karosserie des Kraftfahrzeugs vorgesehenen Konsolenteil, welches zumindest zwei Seitenwangen aufweist, wobei eine erfindungsgemäße Lenkspindellagereinheit mit ihrem Befestigungsbereich zwischen den Seitenwangen angeordnet und mittels der Befestigungsstege an den Seitenwangen gehalten ist.

Bei erfindungsgemäßen Lenksäulen handelt es sich günstigerweise um sogenannte verstellbare Lenksäulen. Diese sind, wie an sich bekannt, dadurch gekennzeichnet, dass die Lenkspindel samt Lenkspindellagereinheit gegenüber dem Konsolenteil in ihrer Position verstellbar ist. Hierdurch kann die Position des Lenkrades an den jeweiligen Fahrer des Fahrzeugs angepasst werden. Besonders bevorzugte Ausgestaltungsformen erfindungsgemäßer Lenksäulen sehen vor, dass die Lenkspindel in ihrer Längsrichtung und/oder in einer zur Längsrichtung orthogonalen Höhenrichtung verstellbar ist.

Bevorzugte Ausgestaltungsformen solcher Lenksäulen sehen vor, dass zwischen zumindest, vorzugsweise genau, zwei Seitenwangen des zur Befestigung der Lenksäule an einer Karosserie des Kraftfahrzeugs vorgesehenen Konsolenteils die Lenkspindellagereinheit zur drehbaren Lagerung der Lenkspindel der Lenksäule gelagert ist. Zwischen den Seitenwangen des Konsolenteils und der Lenkspindellagereinheit ist bei bevorzugten Ausgestaltungsformen ein Lagerteil angeordnet. Ein Spannbolzen der Lenksäule durchdringt dabei die Seitenwangen des Konsolenteils und das Lagerteil und die Lenkspindellagereinheit. Das Lagerteil weist dabei zumindest eine Lagerteilsicke und die Lenkspindellagereinheit zumindest eine Lenkspindellagereinheitsicke auf, wobei die Lagerteilsicke zumindest bereichsweise flächig an der Lenkspindellagereinheitsicke anliegt. Es ist vorgesehen, dass der Spannbolzen das Lagerteil in der Lagerteilsicke und die Lenkspindellagereinheit in der Lenkspindellagereinheitsicke durchdringt.

Die erfindungsgemäße Lenksäule kann mit Vorteil in ihrer Höhe, gleichbedeutend mit ihrer Neigung, und/oder in ihrer Länge einstellbar ausgebildet sein. Bevorzugt sind allgemein kostengünstige höhen- und längenverstellbare Lenksäulen, die eine Feststelleinrichtung umfassen, das die wahlweise Freigabe (= geöffneter Zustand der Feststelleinrichtung) oder Fixierung (=geschlossener Zustand der Feststelleinrichtung) der jeweiligen Verstellungsrichtung ermöglicht. Der Spannbolzen, als Teil einer derartigen Feststelleinrichtung, im Verbund mit weiteren Spannteilen, wie beispielsweise einem Klemmstück, einer Nockenplatte, einer Spannmutter, kann dabei in einfacher Weise zur wahlweisen Freigabe oder Fixierung der je nach Ausführung möglichen Verstellung in Längsrichtungen und/oder Höhenrichtung in bekannter Weise dienen. Unabhängig von einer formschlüssigen oder kraftschlüssigen (auch reibschlüssigen) Fixierung, ist es stets günstig, wenn hohe Presskräfte im geschlossenen Zustand der Feststelleinrichtung auf die Verbindungen zwischen Lenkspindellagereinheit und Lagerteil einerseits und Lagerteil und Konsolenteil andererseits aufgebracht sind.

Durch das Durchdringen von Lenkspindelfagereinheitsicke und Lagerteilsicke mittels des Spannbolzens werden die vom Spannbolzen ausgeübten Klemmkräfte direkt auf die beiden genannten Sicken übertragen, sodass mit einer einfachen Konstruktion große Kräfte übertragen werden können. Dies hilft auch, die Anzahl der Bauteile zu verringern. Im geöffneten Zustand, in dem über den Spannbolzen keine oder nur geringfügige Klemmkräfte übertragen werden, wird ebenfalls eine hohe Steifigkeit erreicht. Die Steifigkeit kann dabei weiter erhöht werden, wenn das Lagerteil und die Lenkspindellagereinheit, an den parallel zu den beiden Seitenwangen ausgerichteten Oberflächen, beidseits der Lenkspindel jeweils korrespondierend eine Lenkspindellagereinheitsicke und eine Lagerteilsicke aufweisen, die von einem Spannbolzen durchsetzt sind. Dies hilft auch, die Anzahl der Bauteile und/oder den Materialeinsatz zur Darstellung der Lenksäule zu verringern. Im geöffneten Zustand, in dem über den Spannbolzen keine oder nur geringfügige Klemmkräfte übertragen werden, wird durch die erfindungsgemäße Anordnung ohne großen Aufwand ein spielarmes Führungssystem erreicht. Dem Lenker des Kraftfahrzeuges wird somit auch in diesem Zustand ein stabiles und sattes Gefühl beim Anfassen des an der Lenkspindel der Lenksäule befestigten Lenkrades gegeben. Die Lagerteilsicke und die Lenkspindellagereinheitsicke sowie eine weiter unten noch genannte, gegebenenfalls auch vorhandene Konsolenteilsicke werden günstigerweise zueinander korrespondierend ausgebildet. In diesem Sinne ist bevorzugt auch vorgesehen, dass die Lagerteilsicke in einer Schnittebene durch eine Längsmittelachse des Spannbolzens gesehen, geometrisch ähnlich zur Lenkspindellagereinheitsicke ausgebildet ist. Das gleiche gilt günstigerweise auch, soweit vorhanden, für eine Konsolenteilsicke. Weiters ist es auch günstig, wenn die Lagerteilsicke und/oder die Lenkspindellagereinheitsicke und/oder die gegebenenfalls vorhandene Konsolenteilsicke in sich achsensymmetrisch bezüglich einer Längsmittelachse des Spannbolzens ausgebildet ist bzw. sind.

Günstig ist es, wenn die genannten Sicken jeweils mit ihren Seitenwänden, vorzugsweise paarweise, aneinander anliegen. Um in Achsrichtung aber besonders hohe Klemmkräfte übertragen zu können, sehen bevorzugte Ausgestaltungsformen der Erfindung vor, dass die Lagerteilsicke und die Lenkspindellagereinheitsicke und soweit vorhanden auch die Konsolenteilsicke jeweils Seitenwände und jeweils einen die Seitenwände miteinander verbindenden Sickengrund aufweisen. Besonders vorteilhaft ist die Ausbildung von Seitenwänden in den jeweiligen Sicken, die im Bereich von 30° bis 60°, bevorzugt 45° bis 60° geneigt sind, gegenüber dem Sickengrund. Im geschlossenen Zustand der Feststelleinrichtung liegen die Lagerteilsicke und die Lenkspindellagereinheitsicke mit ihren jeweiligen Seitenwänden , vorzugsweise paarweise, mit Vorspannung aneinander an. Der Spannbolzen ist günstigerweise jeweils durch eine Öffnung im jeweiligen Sickengrund hindurchgeführt.

Die Ausbildung des Sickengrundes, sowohl in der Lagerteilsicke als auch in der Lenkspindellagereinheitsicke, die parallel, oder zumindest nahezu parallel, zueinander ausgerichtet sind, ermöglicht den Ausgleich von Toleranzen bei gleichzeitiger Erhöhung der Kontaktspannung im Kontakt zwischen den Seitenwänden der beiden Sicken. In diesem Fall berühren sich die beiden Sickengründe im geschlossenen Zustand der Feststelleinrichtung nicht. Alternativ ist es jedoch denkbar und möglich unter Einschränkung der Toleranz, diesen Kontakt zwischen den jeweiligen Sickengründen gerade vorzusehen, wobei ebenfalls auf den Kontakt zwischen den Seitenwänden eine erhebliche Presskraftsteigerung ermöglicht wird.

Wie bereits angesprochen, sehen bevorzugte Ausgestaltungsformen der Erfindung vor, dass die Seitenwangen des Konsolenteils jeweils zumindest eine Konsolenteilsicke aufweisen und der Spannbolzen die Seitenwangen in der Konsolenteilsicke durchdringt und die Konsolenteilsicke, vorzugsweise auf zwei einander gegenüberliegenden Seiten des Spannbolzens, zumindest bereichsweise flächig an der Lagerteilsicke anliegt.

Durch das Hindurchführen des Spannbolzens durch die Lagerteilsicke, die Lenkspindellagereinheitsicke und gegebenenfalls auch die Konsolenteilsicke kann eine äußerst kompakte Bauweise erreicht werden. Der Spannbolzen kann sehr nah an der, in der Lenkspindellagereinheit drehbar gelagerten Lenkspindel angeordnet werden. Dies führt zu einer gleichermaßen kompakten wie auch stabilen Bauweise. Außerdem wirken die über den Spannbolzen übertragenen Kräfte sehr unmittelbar auf die genannten Sicken ein.

Günstigerweise ist vorgesehen, dass der Bolzen die Lagerteilsicke und die Lenkspindellagereinheitsicke sowie die gegebenenfalls vorhandene Konsolenteilsicke mittig durchdringt, was für eine symmetrische, auf alle Seitenwände der jeweiligen Sicken verteilte Krafteinleitung weiters günstig ist. Der Sickengrund ist günstigerweise so breit ausgeführt, dass der Spannbolzen vollständig durch eine Öffnung im Sickengrund hindurchgeführt werden kann. Weiters kann der Sickengrund seitlich zu den genannten Öffnungen auch noch Bereiche aufweisen, mit denen er an den Sickengründen der anderen Sicken abgestützt ist. Die genannten Öffnungen bzw. Aussparungen in den Sicken bzw. Sickengründen, durch die der Spannbolzen durchgeführt ist, sollten günstigerweise größer als der Durchmesser des Spannbolzens sein, sodass der Spannbolzen nicht direkt an den Rändern der genannten Öffnungen bzw. Aussparungen anliegt. Dies hat beispielsweise den Vorteil, dass im Falle eines Fahrzeugcrash keine Rotationsbewegung des Spannbolzens ausgelöst wird. Weiter wird der Verschleiß in den Langlöchern reduziert.

Der Vollständigkeit halber wird darauf hingewiesen, dass es sich bei der Lenkspindellagereinheitsicke um eine Sicke in der Lenkspindellagereinheit, bei der Lagerteilsicke entsprechend um eine Sicke im Lagerteil und bei der Konsolenteilsicke wiederum entsprechend um eine Sicke in dem Konsolenteil handelt. Eine Sicke ist, wie allgemein bekannt, eine rinnenförmige Vertiefung bzw. Kehlung. Geometrisch ähnlich sind zwei Sicken, wenn sie sich durch eine Ähnlichkeitsabbildung, d.h. eine geometrische Abbildung die sich aus zentrischen Streckungen und Kongruenzabbildung wie Verschiebung, Drehung, Spiegelung zusammensetzen lässt, in einander übergeführt werden können.

Im Sinne der Erfindung ist es denkbar und möglich, die Sicken als sogenannte Innensicken oder auch als Außensicken auszubilden. Bevorzugt sind die genannten Sicken als sogenannte Innensicken ausgebildet, da in diesem Fall eine einfachere Konstruktion zu einer entsprechend stabilen Lenksäule führt. Als Innensicke ist im Sinne der Erfindung besonders bevorzugt eine Sicke zu verstehen, deren Boden etwa senkrecht zur Ebene der Seitenwangen in Richtung zur Lenkspindel hin vertieft ist, wobei der Boden im Wesentlichen parallel zur Ebene der Seitenwangen verläuft. Hierdurch wird eine kompakte Bauweise erreicht. Zusätzlich können auch hohe Kräfte übertragen werden. In diesem Sinne ist es somit günstig, wenn die Lagerteilsicke und die Lenkspindellagereinheitsicke und soweit vorhanden auch die Konsolenteilsicke als in Richtung in den Bereich zwischen den Seitenwangen des Konsolenteils hinein vertiefte Sicken ausgebildet sind. Im Sinne einer günstigen und möglichst effektiven Kraftübertragung sehen bevorzugte Varianten weiters vor, dass die Lagerteilsicke auf zwei einander gegenüberliegenden Seiten des Spannbolzens zumindest bereichsweise flächig, oder alternativ zumindest bereichsweise linienförmig, an der Lenkspindellagereinheitsicke anliegt. Im Sinne einer spielarmen Führung und der Möglichkeit auch im Crashfall hohe Kräfte aufnehmen zu können, sehen besonders bevorzugte Ausgestaltungsformen der Erfindung vor, dass die Lagerteilsicke und/oder die Lenkspindellagereinheitsicke und/oder die gegebenenfalls vorhandene Konsolenteilsicke längserstreckt ausgebildet ist bzw. sind. Hierdurch wird eine besonders große Führungslänge und damit eine ideale Kraftabstützung bei Drehmomentbelastung wie z.B. im Crashfall geschaffen.

Besonders bevorzugte Ausgestaltungsformen der Erfindung sehen vor, dass das Lagerteil einstückig z.B. aus einem gebogenen, vorzugsweise U-förmig gebogenen, Blechstreifen gebildet ist. Im Sinne einer stabilen Lagerung weist das Lagerteil zumindest zwei voneinander entfernte Befestigungsstellen auf, an denen es direkt oder indirekt an der Karosserie des Kraftfahrzeugs befestigt werden kann. In diesem Sinne sieht eine bevorzugte Ausgestaltungsform der Erfindung vor, dass das Lagerteil an zumindest einem, vom Spannbolzen distanzierten Ort eine fixe oder ein Schwenkgelenk bildende Lagerteilbefestigung zur Befestigung des Lagerteils an der Karosserie des Fahrzeugs oder am Konsolenteil aufweist. Die Lagerteilbefestigung kann dabei verstärkt bzw. versteift ausgeführt sein. Im Sinne einer möglichst stabilen, spielarmen Lagerung ist es günstig, wenn die Entfernung zwischen Spannbolzen und Lagerteilbefestigung zumindest der halben, vorzugsweise zumindest dreiviertel der, Länge des Lagerteils entspricht.

Bevorzugte Varianten der Erfindung sind, wie bereits erwähnt, als sogenannte verstellbare Lenksäule ausgeführt. So kann vorgesehen sein, dass das Lagerteil zur Bereitstellung einer Höhenverstellbarkeit der Lenksäule schwenkbar gelagert ist. Weiters kann vorgesehen sein, dass die Lenkspindellagereinheit zur Bereitstellung einer Längsverstellbarkeit der Lenksäule in Längsrichtung der Lenkspindel verschiebbar im Lagerteil gelagert ist. Besonders bevorzugte Ausgestaltungsformen von erfindungsgemäßen Lenksäulen sind sowohl höhenverstellbar als auch längsverstellbar. Sie weisen somit eine Kombination der zuletzt genannten Merkmale auf. Der Vollständigkeit halber wird aber darauf hingewiesen, dass es sich bei erfindungsgemäßen Lenksäulen auch um sogenannte starre Lenksäulen handeln kann, welche keine der genannten Verstellmöglichkeiten aufweisen.

Es ist auch zu berücksichtigen, dass die bezüglich der Sicken genannten Merkmale der Lenksäule nicht nur dazu eingesetzt werden können, um eine möglichst spielarm verstellbare Lenksäule zu schaffen. Vielmehr kann das Durchdringen der genannten Sicken durch den Spannbolzen auch dazu genutzt werden, eine Energieabsorptionseinrichtung für die genannte starre oder aber auch verstellbare Lenksäule zu schaffen, indem die genannten Sicken als an sich bekannte, sich im Crashfall umformende Crashsicken ausgeführt sind. Durch die Ausgestaltung der Sicken kann im Crashfall zum Energieabbau ein Durchrutschen über die Sickenführung ermöglicht werden. Bei verstellbaren Lenksäulen, bei denen die genannten Sicken zusätzlich auch als Crashsicken ausgebildet sind, befinden sich die für die Energieumwandlung im Falle eines Crashs relevanten Bereiche der Sicken günstigerweise am Ende der Verstellwege für die Lenksäulenverstellung.

Weitere Merkmale und Einzelheiten bevorzugter Ausgestaltungsformen der Erfindung werden anhand der nachfolgenden Figurenbeschreibung dargelegt. Es zeigen:
- Fig. 1 und 2: ein erstes erfindungsgemäßes Ausführungsbeispiel in Form einer län genverstellbaren Lenksäule;
- Fig. 3 und 4: eine zweite erfindungsgemäß ausgebildete Lenksäule, welche höhen-und längenverstellbar ist;
- Fig. 5: eine Abwandlungsform des zweiten erfindungsgemäßen Ausführungsbeispiel;
- Fig. 6: eine erste erfindungsgemäß ausgebildete Lenkspindellagereinheit, wie sie in den Lenksäulen gemäß der Fig. 1 bis 5 zum Einsatz kommen kann;
- Fig. 7 bis 9: verschiedene Schnittdarstellungen zur Lenkspindellagereinheit gemäß Fig. 6;
- Fig. 10: den Bereich A aus Fig. 2;
- Fig. 11: den Bereich B aus Fig. 4;
- Fig. 12: ein Beispiel, wie das Mantelblech im Befestigungsbereich aus zwei Blechumformteilen zusammengesetzt werden kann;
- Fig. 13: eine alternative Ausgestaltungsform des Befestigungsbereiches des Mantelblechs und
- Fig. 14 und 15: Darstellungen einer zweiten erfindungsgemäß ausgebildeten Lenk spindellagereinheit, wie sie in den Lenksäulen gemäß der Fig. 1 bis 5 zum Einsatz kommen kann, unter Verwendung eines Befestigungsbereiches 6 gemäß Fig. 13.

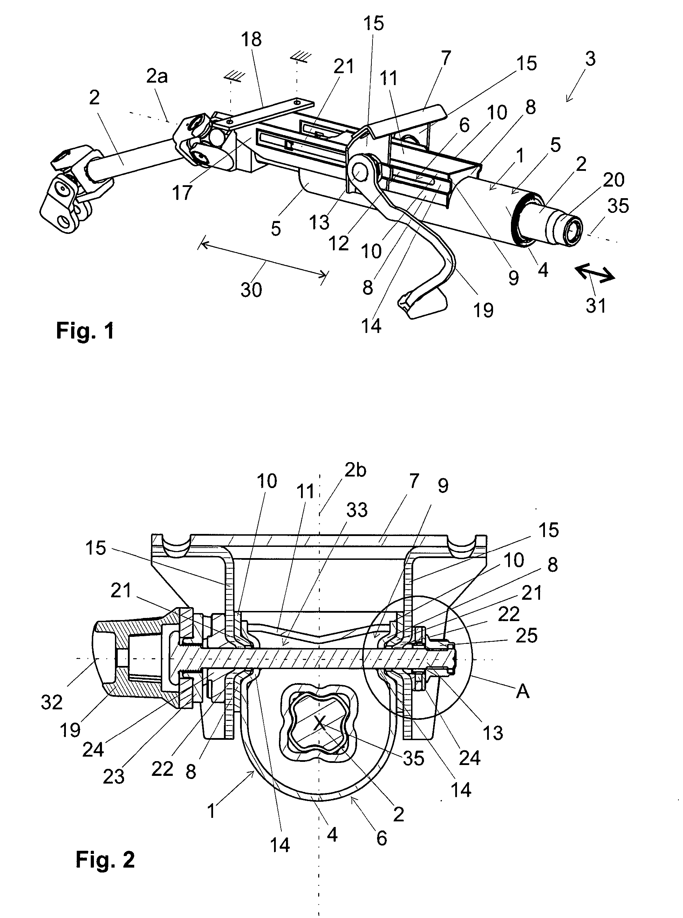

In Fig. 1 ist eine erste Lenksäule 3 mit einer erfindungsgemäßen Lenkspindellagereinheit 1 dargestellt. Mittels des Konsolenteils 7 kann diese an einer Karosserie eines hier nicht dargestellten Fahrzeugs befestigt werden. Fig. 2 zeigt einen Vertikalschnitt durch diese Lenksäule 3 entlang des Spannbolzens 13. Insbesondere in Fig. 2 ist gut zu sehen, dass das Konsolenteil 7 zwei Seitenwangen 15 aufweist, zwischen denen die Lenkspindellagereinheit 1 gehalten ist. In der Lenkspindellagereinheit 1 ist die Lenkspindel 2 um ihre Längsachse 35 drehbar gelagert. Der Lenkradanschluss 20 der Lenkspindel 2 ist zur Befestigung eines hier nicht dargestellten Lenkrades an der Lenkspindel 2 vorgesehen. Zwischen den Seitenwangen 15 und der Lenkspindellagereinheit 1 befindet sich das Lagerteil 17. Am vom Spannbolzen 13 abgewandten Ende ist das Lagerteil 17 mittels der Lagerteilbefestigung 18, im gezeigten Ausführungsbeispiel an der hier nicht dargestellten Karosserie des Kraftfahrzeugs befestigbar. Es sind auch Ausgestaltungsformen denkbar, bei denen die Lagerteilbefestigung 18 an dem Konsolenteil 7 befestigt wird. Im ersten Ausführungsbeispiel ist die Lagerteilbefestigung 18 jedenfalls starr ausgeführt. Die Länge des Lagerteils 17 ist in der Zeichnung mit dem Bezugszeichen 30 versehen. Wie bereits eingangs erläutert, ist es günstig, wenn die Lagerteilbefestigung 18 möglichst weit von dem Spannbolzen 13 entfernt ist. Hierzu sollte, wie bereits ausgeführt, die Entfernung zwischen Spannbolzen 13 und Lagerteilbefestigung 18 zumindest die Hälfte, vorzugsweise zumindest Dreiviertel, der Länge 30 des Lagerteils 17 betragen.

Beim gezeigten Ausführungsbeispiel gemäß der Fig. 1 und 2 handelt es sich um eine längenverstellbare Lenksäule 3. Die Verstellrichtungen sind mit dem Doppelpfeil 31 gekennzeichnet. Dies entspricht den Längsrichtungen der Lenkspindel 2.

Um einerseits die Verstellung in Längsrichtungen 31 zuzulassen, andererseits während des Betriebes aber eine ausreichend feste Befestigung der Lenkspindellagereinheit 1 an dem Konsolenteil 7 zu gewährleisten, ist bei dieser Lenksäule, wie an sich bekannt, eine Feststelleinrichtung vorgesehen, welche unter anderem den Spannbolzen 13 und den Betätigungshebel 19 umfasst. Natürlich sind auch motorische Betätigungen der Feststelleinrichtung denkbar. In solchen Fällen kann dann auf den Betätigungshebel 19 verzichtet werden. Feststelleinrichtungen mit Spannbolzen 13 für verstellbare Lenksäulen 3 sind beim Stand der Technik in einer Vielzahl von Ausgestaltungsformen bekannt. Die hier gezeigten Ausführungsbeispiele dienen lediglich als Veranschaulichung einer von vielen verschiedenen möglichen Varianten, wie das Spannen und Entspannen der Feststelleinrichtung von statten gehen kann.

Im gezeigten Ausführungsbeispiel ist eine Nockenplatte 23 drehfest mit dem Betätigungshebel 19 verbunden. Die Nocken dieser Nockenplatte 23 wirken mit entsprechenden Gegennocken des Klemmstücks 24 zusammen. Das Klemmstück 24 ist drehfest mit dem Konsolenteil 7 verbunden. Auf der gegenüberliegenden Seite ist der Spannbolzen 13 mit einer Spannmutter 25 fixiert. Auch dort befindet sich ein Klemmstück 24 oder ein Axiallager, welches zwischen Spannmutter 25 und der entsprechenden Seitenwange 15 des Konsolenteils 7 angeordnet ist. Durch Drehen des Betätigungshebels 19 um die Mittenlängsachse 32 des Spannbolzens 13 wird die Nockenplatte 23 gegen das dazu benachbart angeordnete Klemmstück 24 verdreht. Je nach Stellung der beteiligten Nocken zueinander befindet sich dann die Feststelleinrichtung im geschlossenen Zustand, in dem die Lenkspindellagereinheit 1 zumindest bei den im normalen Betrieb auftretenden Kräften am Konsolenteil 7 fixiert ist. Durch entsprechendes Drehen des Betätigungshebels 19 kann dann die Feststelleinrichtung in den geöffneten Zustand gebracht werden, in dem ein Verstellen in Längsrichtungen 31 der Lenkspindellagereinheit 1 relativ zum Konsolenteil 7 und damit eine Einstellung der Position des Lenkrades möglich ist. Solche Feststelleinrichtungen sind an sich bekannt und müssen hier nicht weiter erläutert werden.

Wie insbesondere in der Schnittdarstellung gemäß Fig. 2 gut zu sehen ist, weisen sowohl das Lagerteil 17 als auch die Lenkspindellagereinheit 1 jeweils Sicken auf, mit denen sie ineinander gelagert sind. Konkret ist im ersten Ausführungsbeispiel vorgesehen, dass die jeweilige Lagerteilsicke 21 in einer der Lenkspindellagereinheitsicken 14 geführt ist. Im gezeigten ersten Ausführungsbeispiel gemäß der Fig.1 und 2 weist zusätzlich auch das Konsolenteil 7 bei beiden Seitenwangen 15 jeweils eine Konsolenteilsicke 22 auf, welche im gezeigten Ausführungsbeispiel in jeweils eine der Lagerteilsicken 21 eingreift. Der Spannbolzen 13 ist durch die Lagerteilsicken 21 und die Lenkspindellagereinheitsicken 14 hindurchgeführt. Im gezeigten Ausführungsbeispiel ist er zusätzlich auch noch durch die Konsolenteilsicken 22 hindurchgeführt. Es ist denkbar und möglich, auch bei Lenksäulen 3, die nur in ihrer Länge verstellbar sind, auf eine Konsolenteilsicke 22 zu verzichten. Die Seitenwangen 15 sind dann im Bereich der Klemmung und Verstellung bevorzugt plan ausgebildet, zumindest in der zur Lenkspindellagereinheit gerichteten Oberfläche.

Wie besonders gut in Fig. 2 zu sehen, ist es günstig, wenn wie in diesem Ausführungsbeispiel auch realisiert, die genannten Sicken als sogenannte Innensicken ausgeführt sind. Dies ist der Fall, wenn sie in Richtung in den Bereich 33 zwischen den Seitenwangen 15 des Konsolenteils 7 bzw. in Richtung in den, den Bereich 33 bildenden Innenraum des Befestigungsbereichs 6 hinein vertieft ausgebildet sind.

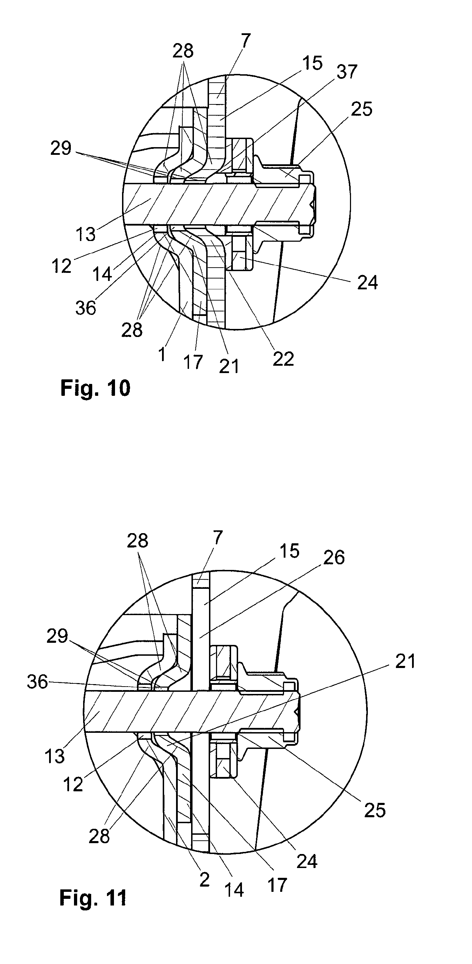

Der Bereich A aus Fig. 2 ist vergrößert noch einmal in Fig. 10 dargestellt. Hier ist besonders gut zu sehen, dass jede der Sicken 14, 21 und 22 jeweils zwei Seitenwände 28 aufweist, welche jeweils mittels eines Sickengrundes 29 miteinander verbunden sind. Der Spannbolzen 13 durchdringt jeweils den Sickengrund 29 der genannten Sicken 14, 21 und 22. Die hierzu notwendige Aussparung bzw. Öffnung ist günstigerweise nur so groß gewählt, dass noch seitliche Ränder des Sickengrundes 29 vorhanden sind. Dies ermöglicht eine höhere Steifigkeit bei der Anlage der Lagerteilsicke 21 an der jeweiligen Lenkspindellagereinheitsicke 14, da dadurch in Richtung der Mittenlängsachse 32 des Spannbolzens 13 Kräfte besonders gut übertragen werden können. Die Seitenwände 28 und hier auch die Sickengründe 29 der jeweils benachbart zueinander liegenden Sicken 14, 21 und 22 liegen flächig aneinander an. Sie sind symmetrisch bezüglich der Mittenlängsachse 32 des Spannbolzens 13 angeordnet und weisen im Sinne eines optimalen aneinander Anliegens eine geometrisch ähnliche Gestalt auf. Im ersten Ausführungsbeispiel gemäß Fig. 1 und 2 weisen die jeweils in die Konsolenteilsicken 22 von außen eingreifenden Klemmstücke 24 entsprechend der Sickenvertiefung ausgeformte Vorsprünge auf, mit denen sie in die Konsolenteilsicken 22 eingreifen. Durch das Hindurchführen des Spannbolzens 13 direkt durch die Sicken 14, 21 und hier auch 22 wirken die Spannkräfte des Spannbolzens 13 direkt auf die genannten Sicken ein, womit eine gleichermaßen einfache wie auch effektive Bauweise und Kraftübertragung realisiert wird.

Mit Vorteil ist die Durchführöffnung 12 bzw. das diese bildende Langloch in der Lenkspindellagereinheit 1 breiter als der Durchmesser des Lochs 36 im Lagerteil 17. Mit Vorteil ist der Durchmesser des Lochs 37 im Konsolenteil 7 kleiner als der Durchmesser des Lochs 36 im Lagerteil 17. Auf diese Weise kann der Verschleiß gemindert werden. Es ist auch denkbar und möglich zur Darstellung einer größeren Verstelllänge, das Loch 36 als Langloch auszubilden. Dann wäre die Breite des Langlochs anstelle des Durchmessers des Lochs 36 als Maß für die o.g. Vergleiche anzusetzen.

Allgemein ist darauf hinzuweisen, dass durch die erfindungsgemäße Konstruktion eine sehr kompakte Bauweise möglich ist, indem der Abstand zwischen dem Spannbolzen 13 und der Lenkspindel 2 sehr gering gehalten werden kann.

Im ersten Ausführungsbeispiel weisen die Lenkspindellagereinheitsicken 14 als Durchführöffnungen 12 jeweils ein Langloch auf, durch die der Spannbolzen 13 hindurchgeführt ist. Durch diese in Längsrichtung 31 der Lenkspindel 2 längserstreckten Langlöcher ist es möglich, die Lenkspindellagereinheit 1 in den Längsrichtungen 31 relativ zum Konsolenteil 7 zu verstellen.

Die Lagerteilsicken 21 und die Konsolenteilsicken 22 müssen nicht längserstreckt ausgebildet sein. Durch die Längserstreckung des Lagerteils 17 über seine Länge 30 und die in Längsrichtung 31 vom Spannbolzen 13 entfernt realisierte Anordnung der Lagerteilbefestigung 18 wird eine sehr verwindungssteife und spielarme Lagerung der Lenkspindellagereinheit 1 erreicht. Die Verwindungssteifigkeit der Konstruktion kann noch weiter erhöht werden, indem man, wie im ersten Ausführungsbeispiel realisiert, auch die Lagerteilsicken 21 längserstreckt ausführt. Hierdurch wird der Eingriff der Lagerteilsicken 21 in die Lenkspindellagereinheitsicken 14 in Längsrichtung 31 deutlich verlängert, was die Verwindungssteifigkeit der Gesamtkonstruktion weiter erhöht.

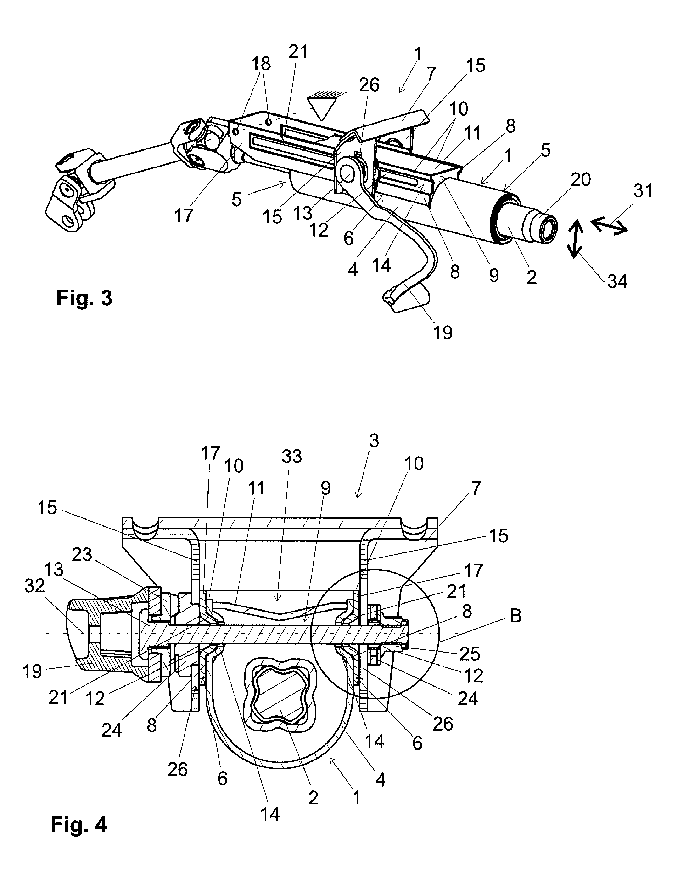

Bevor nun auf das Ausführungsbeispiel gemäß der Fig. 3 und 4 eingegangen wird, ist darauf hinzuweisen, dass in allen gezeigten Ausführungsbeispielen die jeweiligen Sickenanordnungen zweiseitig, also an beiden Seitenwangen 15 des Konsolenteils 7 realisiert sind. Dies ist im Sinne einer spielarmen steifen Konstruktion günstig, aber nicht zwingend notwendig. Es wäre auch denkbar, die entsprechenden Sickenanordnungen im Bereich nur einer der Seitenwangen 15 zu realisieren.

Im Ausführungsbeispiel gemäß Fig. 3 und 4 ist zusätzlich zur Längenverstellbarkeit der Lenksäule 3 in Längsrichtungen 31 noch eine Höhenverstellbarkeit dieser Lenksäule 3 bzw. deren Lenkspindel 2 in den Höhenrichtungen 34 vorgesehen. Hierzu ist in diesem Ausführungsbeispiel in den beiden Seitenwangen 15 des Konsolenteils 7 jeweils ein vertikal verlaufendes Langloch 26 angeordnet, in dem der Spannbolzen 13 längsverschieblich angeordnet ist. Höhen- wie auch Längenverstellung sind allerdings nur dann möglich, wenn die Feststelleinrichtung sich im geöffneten Zustand befindet. Im geschlossenen Zustand der Feststelleinrichtung sind diese Verstellmöglichkeiten zumindest bei beim normalen Betrieb auftretenden Kräften nicht gegeben.

Um auch die Höhenverstellbarkeit in Höhenrichtungen 34 realisieren zu können, weist im Ausführungsbeispiel gemäß der Fig. 3 und 4 die Lagerteilbefestigung 18 des Lagerteils 17 ein Schwenkgelenk auf. Das Lagerteil 17 kann um dieses Schwenkgelenk der Lagerteilbefestigung 18 zusammen mit der Lenkspindellagereinheit 1 verschwenkt werden, wenn eine Höhenverstellung durchgeführt wird. Ein weiterer Unterschied zum ersten Ausführungsbeispiel besteht darin, dass bei dieser Variante eine Konsolenteilsicke an den beiden Seitenwangen 15 entfällt. In den Seitenwangen 15 sind beidseitig die genannten Langlöcher 26 vorgesehen. In diesem Ausführungsbeispiel weisen die Klemmstücke 24 entsprechend auch keine Nasen auf, mit denen sie in die Sicken eingreifen würden. Trotzdem ist vorgesehen, dass die Lagerteilsicken 21 in den Lenkspindellagereinheitsicken 14 anliegen und der Spannbolzen 13 durch diese Sicken hindurchtritt. All dies ist in Fig. 11 noch einmal vergrößert gezeigt, indem in dieser Figur der Ausschnitt B aus Fig. 4 herausgezeichnet ist. Bis auf die bereits genannten Unterschiede gilt, soweit anwendbar, das zur Fig. 10 Geschilderte.

Abgesehen von den genannten Unterschieden ist das Ausführungsbeispiel gemäß der Fig. 3 und 4 im Wesentlichen so wie das erste Ausführungsbeispiel ausgeführt, sodass sich zusätzliche Erläuterungen hierzu erübrigen.

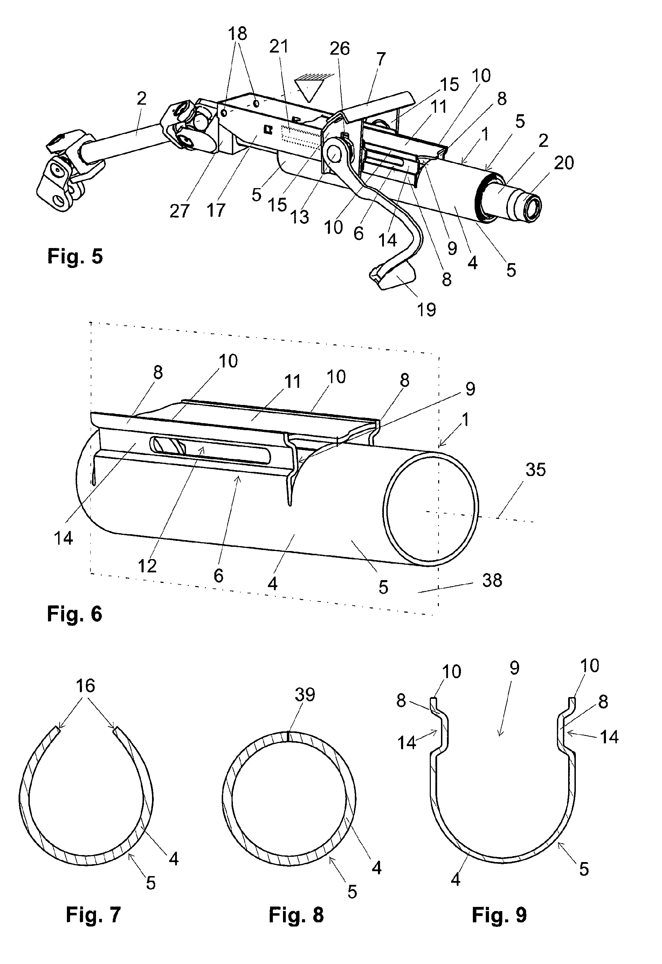

Generell ist darauf hinzuweisen, dass die Lenkspindel 2 in der Regel zumindest zweimal an zwei distanziert zueinander angeordneten Stellen der Lenkspindellagereinheit 1, hier in den umfangsgeschlossenen Bereichen 5 des Mantelblechs 4 mittels hier nicht explizit eingezeichneten, aber an sich bekannten Lagern drehbar gelagert ist. In der in Fig. 5 gezeigten, abgewandelten Ausführungsform des Ausführungsbeispiels gemäß der Fig. 3 und 4 ist zusätzlich noch ein Lenkspindellager 27 am motorseitigen Ende des Lagerteils 17 vorgesehen. Ansonsten entspricht dieses Ausführungsbeispiel gemäß Fig. 5 der Variante gemäß Fig. 3 und 4.

In Fig. 6 ist nun ein Beispiel einer erfindungsgemäß ausgebildeten Lenkspindellagereinheit 1 aus dem Mantelblech 4 dargestellt, wie sie in den Ausführungsvarianten der Lenksäule 3 gemäß der Fig. 1 bis 5, aber auch in anderen erfindungsgemäßen Ausführungsformen zum Einsatz kommen kann. Bei der in Fig. 6 dargestellten Variante ist das Mantelblech 4 aus einem einstückigen Blech geformt und einwandig ausgebildet. Die beiden, in Längsrichtung gesehenen Enden des Mantelblechs 4 sind als umfangsgeschlossene Bereiche 5 zur Aufnahme zumindest je eines Lagers zur drehbaren Lagerung der Lenkspindel 2 ausgebildet. Alternativ ist es auch denkbar und möglich, nur einen umfangsgeschlossenen Bereich 5 vorzusehen, zur Aufnahme zumindest einer Lagerung der Lenkspindel 2. Derartige Lenkspindellagereinheiten sind beispielsweise anwendbar, wenn die zweite Lagerung der Lenkspindel direkt an der Fahrzeugkarosserie oder in einer anderen Einrichtung, beispielsweise einer Hilfskrafteinrichtung für eine Servolenkung, dargestellt ist. Zwischen ihnen befindet sich der Befestigungsbereich 6, in dem eine von zwei einander gegenüberliegenden, jeweils frei auskragenden Befestigungsstegen 8 begrenzte Öffnung 9 vorhanden ist. Günstig ist es generell gesprochen, wenn sich die Öffnung 9, in Umfangsrichtung gesehen, über zumindest 10%, vorzugsweise über zumindest 20%, des Außenumfangs des Mantelblechs 4 im Befestigungsbereich 6 erstreckt. Die Befestigungsstege 8 sind hier einstückige Teile des Mantelblechs 4. Zur Versteifung der Befestigungsstege 8 kann, wie in Fig. 6 auch realisiert, ein gesondertes Verbindungsblech 11 zur Verbindung der Befestigungsstege 8 vorgesehen sein. Günstigerweise verbindet das Verbindungsblech 11 die Befestigungsstege an ihren frei auskragenden Enden 10. Wie dies besonders gut in den Fig. 2 und 4 zu sehen ist, weist dieses Verbindungsblech 11 günstigerweise einen V-förmigen Querschnitt auf. Die Umbiegestelle des V-förmigen Querschnitts verläuft günstigerweise in Längsrichtungen 31. Die Umbiegestelle (=Spitze der V-Form) des V-förmigen Querschnitts verläuft günstigerweise in einer Symmetrieebene 38 des Befestigungsbereichs 6. In dieser Symmetrieebene 38 verläuft bevorzugt auch die Längsachse 35 der Lenkspindel 2, um die die Lenkspindel 2 drehbar in der Lenkspindellagereinheit 1 gelagert ist. Denkbar und möglich ist es jedoch auch, das Verbindungsblech in einer W-Form auszubilden. Die das V, beziehungsweise W bildenden Flächen können dabei auch bogenförmig ausgebildet sein.

Das in Fig. 6 dargestellte Mantelblech 4 kann mit den eingangs bereits erläuterten Verfahren hergestellt werden. Z.B. ist es möglich, dass man ein gestanztes und geprägtes einstückiges Blechteil zunächst U-förmig aufbiegt. Beim vor dem Aufbiegen durchgeführten Zuschneiden dieses Blechteils entsteht, wenn überhaupt, nur sehr geringfügiger Verschnitt. Die später umfangsgeschlossenen Bereiche 5 werden im Anschluss an das U-förmige Aufbiegen weiter verformt bzw. gerollt, bis sie mit ihren Stirnseiten 16 aneinander anstehen und somit einen umfangsgeschlossenen, vorzugsweise rohrförmigen, Lagersitz bereitstellen. Die Stirnseiten 16 können dann in den umfangsgeschlossenen Bereichen 5 an der Schweißnaht 39 miteinander verschweißt oder an entsprechender Stelle miteinander verstemmt werden. Evtl. kann eine Nachkalibrierung des Lagersitzes in diesen Bereichen 5 vorgenommen werden. Fig. 7 zeigt einen Schnitt durch das Mantelblech 4 in einem der Bereiche 5, bevor die stirnseitigen Enden 16 vollständig in den aneinander anliegenden Zustand gebogen sind. Fig. 8 zeigt diesen Bereich 5 in der endgültigen Ausgestaltung, in der er umfangsgeschlossen und hier rohrförmig ausgebildet ist. Der Vollständigkeit halber wird darauf hingewiesen, dass das Mantelblech 4 auch in den umfangsgeschlossenen Bereichen 5 nicht zwingend rohrförmig bzw. mit kreisringförmigem Querschnitt ausgebildet sein muss. Es sind auch Vielecken oder andere geometrische Formen denkbar.

Fig. 9 zeigt einen Schnitt durch das Mantelblech im Befestigungsbereich 6. Hier werden die Befestigungsstege 8 mit ihren frei auskragenden Enden 10 ausgeformt. Im gezeigten Ausführungsbeispiel weisen beide Befestigungsstege 8 jeweils eine Lenkspindellagereinheitsicke 14 auf. Die jeweils frei auskragenden Befestigungsstege 8 begrenzen die Öffnung 9. Zur Versteifung des Befestigungsbereichs 6 kann das Verbindungsblech 11 zwischen den Befestigungsstegen 8 eingesetzt und dort z.B. angeschweißt werden. Besonders bevorzugt wird das Verbindungsblech 11 an den frei auskragenden Enden 10 der Befestigungsstege 8 angebracht. Das separat eingesetzte Verbindungsblech 11 kann sehr nah am Spannbolzen 13 angebracht werden, wenn keine Sicken vorhanden sind, sogar direkt tangential an der Öffnung 9. Dies stellt eine hohe Klemmkraftübertragung sicher mit einer verhältnismäßig geringen elastischen Verformung im Befestigungsbereich 6.

Alternativ kann, wie bereits ausgeführt, zur Herstellung der Lenkspindellagereinheit 1 auch vorgesehen sein, dass das Mantelblech 4 aus einem umfangsgeschlossenen Rohrkörper hergestellt wird, indem eine Wand des Rohrkörpers im Befestigungsbereich 6 aufgeschnitten und die frei auskragenden Befestigungsstege 8 und die von den Befestigungsstegen begrenzte Öffnung 9 durch Umformen, vorzugsweise Umbiegen, von durch das Aufschneiden begrenzten Bereichen der Wand ausgebildet werden. Auch dies kann anhand der Fig. 7 bis 9 erläutert werden. Abweichend von der obigen Schilderung geht man zunächst von einem umfangsgeschlossenen Rohr aus. In den Bereichen 5, in denen die Lager zur Lagerung der Lenkspindel 2 angebracht werden sollen, muss dieses Rohr dann evtl. gar nicht mehr weiter bearbeitet werden. Zur Ausbildung des Befestigungsbereiches 6 wird das anfangs umfangsgeschlossene, in Fig. 8 dargestellte Rohr bzw. dessen Wand aufgeschnitten. Ein solcher Schnitt könnte z.B. an der Stelle erfolgen, an der in Fig. 8 die Schweißnaht 39 eingezeichnet ist. Anschließend wären, wie in Fig. 7 gezeigt, die Befestigungsstege 8 durch Umformung, insbesondere Umbiegen, der durch das Aufschneiden begrenzten Bereiche der Wand herzustellen. Gleichzeitig oder anschließend könnten durch entsprechende Umform- bzw. Bearbeitungsprozesse auch noch die in Fig. 9 dargestellten Lenkspindellagereinheitsicken 14 und Durchführöffnungen 12 eingebracht werden.

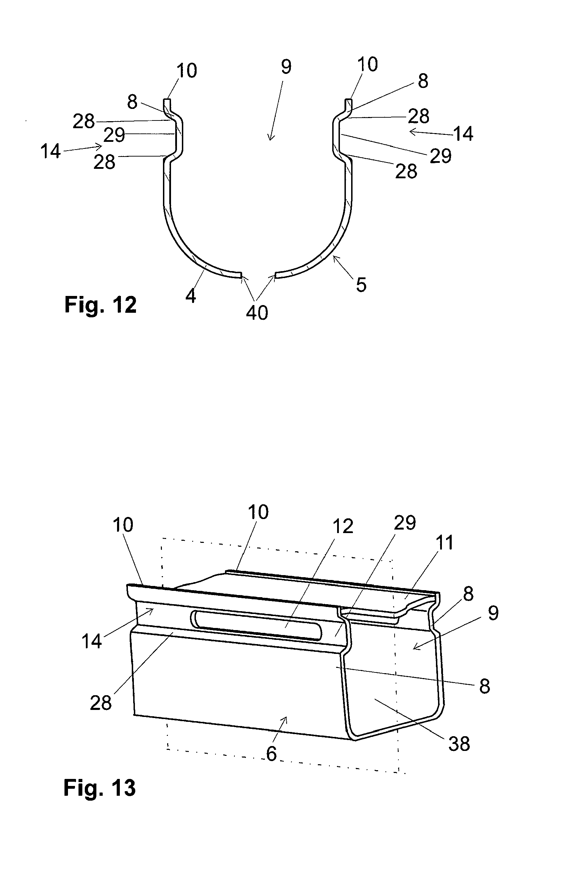

Wie bereits eingangs erläutert, kann alternativ zur einstückigen Ausformung des Mantelblechs 4 auch vorgesehen sein, dass das Mantelblech 4 aus mehreren Blechteilen, insbesondere Strangpressprofilen oder Blechumformteilen, zusammengesetzt, vorzugsweise zusammengeschweißt, ist. Das Zusammensetzen des Mantelblechs aus mehreren Blechteilen ist beispielhaft in Fig. 12 gezeigt. Hier ist ein zu Fig. 9 ansonsten ähnlicher Schnitt durch den Befestigungsbereich 6 gezeigt. Allerdings liegen hier zunächst zwei voneinander getrennte Blechumformteile vor, welche an den entsprechenden Stirnflächen 40 z.B. durch Verschweißen miteinander verbunden werden.

In Fig. 12 ist somit eine weitere Herstelltechnologie für die Lenkspindellagereinheit veranschaulicht. Es ist demnach auch denkbar und möglich, die gesamte Lenkspindellagereinheit aus zwei Halbschalen zu fertigen, wobei die Halbschalen sich sowohl über den späteren Befestigungsbereich 6 als auch über den oder die Bereiche 5 erstrecken. In einem ersten Schritt werden dazu zwei Blechteile geformt, die unmittelbar nach dem Zusammenfügen die gesamte Lenkspindellagereinheit, wie sie in der Figur 6 veranschaulicht ist, bilden. Dazu werden die Halbschalen vorzugsweise entlang der Symmetrieebene 38 miteinander verbunden. Das gesonderte Verbindungsblech 11 wird entsprechend nachträglich eingefügt, um die erfindungsgemäße Lenkspindellagereinheit 1 zu bilden. Gerade eine derartige Technologie ist gut geeignet für die Darstellung der Lenkspindellagereinheit aus einem Verbundwerkstoff, beispielsweise Kohlenstofffaser-Verbundwerkstoff aus vorgefertigten Platten.

Beim Zusammenschweißen können klassische Schweißverfahren genauso wie das Orbitalreibschweißen oder insbesondere auch Laserschweißen eingesetzt werden. Entsprechende Führungsprofilformen für die Blechteile können nach dem Stand der Technik hergestellt werden. Die Ausgestaltung mit mehreren zusammengesetzten Blechteilen hat den Vorteil, dass die Bauteile fertigungsgerechter oder schnittstellengerechter gestaltet werden können. Insbesondere ist es dann besonders einfach möglich, an verschiedenen Stellen verschiedene Wandungsdicken vorzusehen. So können dann z.B. die umfangsgeschlossenen Bereiche 5 zur Lagerung der Lenkspindel dünnwandiger ausgebildet sein, als der Befestigungsbereich 6. Auch könnte die Profilform in den Bereichen 5 innen rund und außen mehreckig sein, um einen einfachen Einbau in die Karosserie verschiedener Fahrzeuge zu ermöglichen.

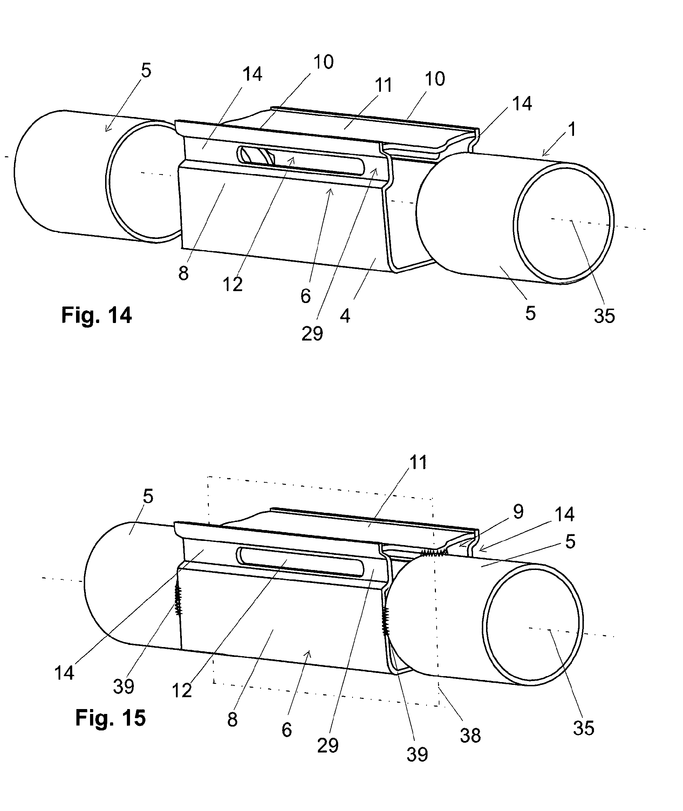

Anhand der Fig. 13 bis 15 ist noch eine weitere Ausgestaltungsform der Erfindung beispielhaft gezeigt, bei der das Mantelblech aus mehreren Blechteilen zusammengesetzt, vorzugsweise zusammengeschweißt wird. Bei den beispielhaft anhand der Fig. 13 bis 15 gezeigten erfindungsgemäßen Ausführungsvarianten ist vorgesehen, dass der Befestigungsbereich 6 und der umfangsgeschlossene Bereich 5 bzw. die umfangsgeschlossenen Bereiche 5 als zunächst separate und dann miteinander, vorzugsweise direkt, verbundene, vorzugsweise verschweißte, Bauteile ausgebildet sind. Mit anderen Worten ist bei diesen Varianten vorgesehen, dass der Befestigungsbereich 6 als separates Bauteil gefertigt ist, das mit zumindest einem Bereich 5 zur Aufnahme zumindest eines Lagers zur drehbaren Lagerung der Lenkspindel 2 gefügt ist, um so die Lenkspindellagereinheit 1 auszubilden. Bei diesen Varianten kann vorgesehen sein, dass der Befestigungsbereich 6 einstückig, vorzugsweise aus genau einem Strangpressprofil oder Blechumformteil, ausgebildet ist. Es ist aber auch genauso gut möglich, dass der Befestigungsbereich 6 aus mehreren Teilen, vorzugsweise aus mehreren Strangpressprofilen oder Blechumformteilen, zusammengesetzt, vorzugsweise zusammengeschweißt, ist. Auch in diesem Ausführungsbeispiel ist die daraus entstehende Lenkspindellagereinheit 1 bzw. ihr Mantelblech 4 überall einwandig ausgebildet. Es kommen in bevorzugten Varianten nirgends Doppel- oder Mehrfachwandungen vor. Fig. 13 zeigt den Befestigungsbereich 6. Dieser wird im gezeigten Ausführungsbeispiel aus zwei Blechteilen gebildet. Aus dem einen Blechteil werden durch Umformung die Befestigungsstege 8 und der sie verbindende Abschnitt des Mantelblechs 4 gebildet. Das zweite Blechteil wird durch das gesonderte Verbindungsblech 11 mit seinem V-förmigen Querschnitt gebildet, wie es bereits bei den vorhergehenden Ausführungsbeispielen geschildert ist. Durch das Einsetzen des gesonderten Verbindungsblechs 11 zwischen die Befestigungsstege 8 an deren frei auskragenden Enden 10 wird die Öffnung 9 nach oben hin begrenzt. Der so ausgebildete Befestigungsbereich 6 kann dann im gezeigten Ausführungsbeispiel mit zwei umfangsgeschlossenen Bereichen 5 zur Aufnahme der Lager zur Lagerung der Lenkspindel 2 verbunden werden. Fig. 14 zeigt den Zustand vor der Verbindung bzw. vor dem Zusammenfügen der Bereiche 5 mit dem Befestigungsbereich 6. Fig. 15 zeigt das Endprodukt, bei dem die Bereiche 5 hier mittels Schweißnaht 39 am vorgefertigten Befestigungsbereich 6 fixiert sind. Auch hier ist somit vorgesehen, dass das Mantelblech 4 zumindest zwei umfangsgeschlossene Bereiche 5 zur Aufnahme jeweils zumindest eines Lagers zur drehbaren Lagerung der Lenkspindel 2 aufweist und der Befestigungsbereich 6 zwischen den umfangsgeschlossenen Bereichen 5 angeordnet ist. Die so ausgebildete Lenkspindellagereinheit 1 kann ebenfalls in den Lenksäulen 3, wie sie in den Fig. 1 bis 5 gezeigt sind, oder auch in anderen erfindungsgemäßen Ausführungsbeispielen einer Lenksäule 3 eingesetzt werden.

Wenn in der vorgängigen Beschreibung als Werkstoff Blech genannt ist, so ist festzustellen, dass die Bauteile oder die Zwischenformen beispielsweise aus Stahlblech, Aluminiumblech, Magnesiumblech aber auch aus Kohlenstofffaser-Verbundwerkstoffen oder anderen Verbundwerkstoffen gefertigt sein können. Anstelle von Blechen können auch Gussteile als Vorform- oder Fertigteile eingesetzt werden. Es ist auch denkbar und möglich einen Mix aus verschiedenen Werkstoffen und verschiedenen Herstellmethoden für die Vorformteile zur Darstellung der Lenkspindellagereinheit einzusetzen. Der Begriff des Blechs und insbesondere der des Mantelblechs 4, im Sinne eines Mantels, ist also entsprechend weit im Sinne einer Wandung bzw. eines Mantels auszulegen und keinesfalls auf metallische bzw. rein metallische Bleche beschränkt.

Soweit anwendbar sind alle in den einzelnen Ausführungsformen gezeigten Merkmale untereinander frei kombinierbar ohne den Bereich der Erfindung zu verlassen.

**Legende**

| zu den Hinweisziffern: | | | |
|---|---|---|---|
| 1 | Lenkspindellagereinheit | 21 | Lagerteilsicke |
| 2 | Lenkspindel | 22 | Konsolenteilsicke |
| 3 | Lenksäule | 23 | Nockenplatte |
| 4 | Mantelblech | 24 | Klemmstück |
| 5 | umfangsgeschlossener Bereich | 25 | Spannmutter |
| 6 | Befestigungsbereich | 26 | Langloch |
| 7 | Konsolenteil | 27 | Lenkspindellager |
| 8 | Befestigungssteg | 28 | Seitenwand |
| 9 | Öffnung | 29 | Sickengrund |
| 10 | frei auskragendes Ende | 30 | Länge |
| 11 | Verbindungsblech | 31 | Längsrichtungen |
| 12 | Durchführöffnung | 32 | Mittenlängsachse |
| 13 | Spannbolzen | 33 | Bereich |
| 14 | Lenkspindellagereinheitssicke | 34 | Höhenrichtungen |
| 15 | Seitenwange | 35 | Längsachse |
| 16 | Stirnseite | 36 | Loch |
| 17 | Lagerteil | 37 | Loch |
| 18 | Lagerteilbefestigung | 38 | Symmetrieebene |
| 19 | Betätigungshebel | 39 | Schweißnaht |
| 20 | Lenkradanschluss | 40 | Stirnflächen |

## Patentansprüche

1. Lenkspindellagereinheit (1) zur drehbaren Lagerung einer Lenkspindel (2) einer Lenksäule (3) für ein Kraftfahrzeug, wobei die Lenkspindellagereinheit (1) ein Mantelblech (4) aufweist, welches zumindest einen umfangsgeschlossenen Bereich (5) zur Aufnahme zumindest eines Lagers zur drehbaren Lagerung der Lenkspindel (2) und zumindest einen Befestigungsbereich (6) zur Befestigung der Lenkspindellagereinheit (1) an einem Konsolenteil (7) der Lenksäule (3) aufweist, wobei das Mantelblech (4) in seinem Befestigungsbereich (6) eine von zumindest zwei einander gegenüberliegenden, jeweils frei auskragenden Befestigungsstegen (8) begrenzte Öffnung (9) aufweist, wobei die Befestigungsstege (8) Teil des Mantelblechs (4) sind, und die frei auskragenden Befestigungsstege (8) des Mantelblechs (4) jeweils zumindest eine Durchführöffnung (12) zum Hindurchführen eines Spannbolzens (13) der Lenksäule (3) aufweisen, **dadurch gekennzeichnet, dass** zumindest einer der, vorzugsweise beide, Befestigungsstege (8) zumindest eine Lenkspindellagereinheitsicke (14) aufweist bzw. aufweisen, und dass die Durchführöffnung (12) zum Hindurchführen des Spannbolzens (13) in der Lenkspindellagereinheitsicke (14) angeordnet ist.

2. Lenkspindellagereinheit (1) nach Anspruch 1, **dadurch gekennzeichnet, dass** die Befestigungsstege (8), vorzugsweise an ihren frei auskragenden Enden (10), mittels eines gesonderten Verbindungsbleches (11) miteinander verbunden sind.

3. Lenkspindellagereinheit (1) nach Anspruch 2, **dadurch gekennzeichnet, dass** das Verbindungsblech (11) einen v-förmigen Querschnitt aufweist.

4. Lenkspindellagereinheit (1) nach einem der Ansprüche 1 bis 3, **dadurch gekennzeichnet, dass** das Mantelblech (4) aus einem einstückigen Blech geformt ist.

5. Lenkspindellagereinheit (1) nach einem der Ansprüche 1 bis 3, **dadurch gekennzeichnet, dass** das Mantelblech (4) aus mehreren Blechteilen zusammengesetzt, vorzugsweise zusammengeschweißt, ist.

6. Lenkspindellagereinheit (1) nach einem der Ansprüche 1 bis 5, **dadurch gekennzeichnet, dass** das Mantelblech (4) zumindest zwei umfangsgeschlossene Bereiche (5) zur Aufnahme jeweils zumindest eines Lagers zur drehbaren Lagerung der Lenkspindel (2) aufweist und der Befestigungsbereich (6) zwischen den umfangsgeschlossenen Bereichen (5) angeordnet ist.

7. Lenkspindellagereinheit (1) nach einem der Ansprüche 1 bis 6, **dadurch gekennzeichnet, dass** jeder der frei auskragenden Befestigungsstege (8) genau eine Lenkspindellagereinheitsicke (14) aufweist.

8. Lenkspindellagereinheit (1) nach einem der Ansprüche 1 bis 7, **dadurch gekennzeichnet, dass** die Durchführöffnung (12) jeweils am Sickengrund (29) der Lenkspindellagereinheitsicke (14) angeordnet ist.

9. Lenkspindellagereinheit (1) nach einem der Ansprüche 1 bis 8, **dadurch gekennzeichnet, dass** die Lenkspindellagereinheitsicke (14) längserstreckt ausgebildet ist.

10. Lenksäule (3) für ein Kraftfahrzeug mit einem, zur Befestigung der Lenksäule (3) an einer Karosserie des Kraftfahrzeugs vorgesehenen Konsolenteil (7), welches zumindest zwei Seitenwangen (15) aufweist, **dadurch gekennzeichnet, dass** eine Lenkspindellagereinheit (1) nach einem der Ansprüche 1 bis 9 mit ihrem Befestigungsbereich (6) zwischen den Seitenwangen (15) angeordnet und mittels der Befestigungsstege (8) an den Seitenwangen (15) gehalten ist.

11. Verfahren zur Herstellung einer Lenkspindellagereinheit (1) nach einem der Ansprüche 1 bis 9, **dadurch gekennzeichnet, dass** das Mantelblech (4) aus einem einstückigen Blech durch Umformen, vorzugsweise Biegen, ausgeformt wird.

12. Verfahren nach Anspruch 11, **dadurch gekennzeichnet, dass** anschließend an das Umformen, vorzugsweise Biegen, einander gegenüberliegende Stirnseiten (16) des einstückigen Blechs zur Ausbildung des umfangsgeschlossenen Bereichs (5) miteinander verbunden, vorzugsweise verschweißt oder verstemmt, werden.

13. Verfahren zur Herstellung einer Lenkspindellagereinheit (1) nach einem der Ansprüche 1 bis 9, **dadurch gekennzeichnet, dass** das Mantelblech (4) aus mehreren vorgeformten Blechteilen zusammengesetzt, vorzugsweise zusammengeschweißt, wird.

14. Verfahren zur Herstellung einer Lenkspindellagereinheit (1) nach einem der Ansprüche 1 bis 9, **dadurch gekennzeichnet, dass** das Mantelblech (4) aus einem umfangsgeschlossenen Rohrkörper hergestellt wird, indem eine Wand des Rohrkörpers im Befestigungsbereich (6) aufgeschnitten und die frei auskragenden Befestigungsstege (8) und die von den Befestigungsstegen (8) begrenzte Öffnung (9) durch Umformen, vorzugsweise Umbiegen, von durch das Aufschneiden begrenzten Bereichen der Wand ausgebildet werden.

## Claims

1. A steering-shaft bearing unit (1) for rotatably mounting a steering shaft (2) of a steering column (3) for a motor vehicle, wherein the steering-shaft bearing unit (1) has a jacket metal sheet (4) which has at least one peripherally closed region (5) for receiving at least one bearing for rotatably mounting the steering shaft (2), and at least one fastening region (6) for fastening the steering-shaft bearing unit (1) to a bracket part (7) of the steering column (3), wherein the jacket metal sheet (4) in its fastening region (6) has an opening (9) delimited by at least two opposing fastening webs (8) which freely project in each case, wherein the fastening webs (8) are part of the jacket metal sheet (4), and the freely projecting fastening webs (8) of the jacket metal sheet (4) have in each case at least one passage opening (12) for a clamping bolt (13) of the steering column (3) to pass through, **characterised in that** at least one, preferably both, of the fastening webs (8) has or have at least one steering-shaft bearing unit bead (14), and **in that** the passage opening (12) for the clamping bolt (13) to pass through is arranged in the steering-shaft bearing unit bead (14).

2. A steering-shaft bearing unit (1) according to Claim 1, **characterised in that** the fastening webs (8), preferably at their freely projecting ends (10), are connected together by means of a separate connecting metal sheet (11).

3. A steering-shaft bearing unit (1) according to Claim 2, **characterised in that** the connecting metal sheet (11) has a V-shaped cross-section.

4. A steering-shaft bearing unit (1) according to one of Claims I to 3, **characterised in that** the jacket metal sheet (4) is formed from a one-piece metal sheet.

5. A steering-shaft bearing unit (1) according to one of Claims 1 to 3, **characterised in that** the jacket metal sheet (4) is composed of, preferably welded from, a plurality of sheet-metal parts.

6. A steering-shaft bearing unit (1) according to one of Claims 1 to 5, **characterised in that** the jacket metal sheet (4) has at least two peripherally closed regions (5) for receiving in each case at least one bearing for rotatably mounting the steering shaft (2), and the fastening region (6) is arranged between the peripherally closed regions (5).

7. A steering-shaft bearing unit (1) according to one of Claims 1 to 6, **characterised in that** each of the freely projecting fastening webs (8) has precisely one steering-shaft bearing unit bead (14).

8. A steering-shaft bearing unit (1) according to one of Claims 1 to 7, **characterised in that** the passage opening (12) is arranged in each case on the bead base (29) of the steering-shaft bearing unit bead (14).

9. A steering-shaft bearing unit (1) according to one of Claims 1 to 8, **characterised in that** the steering-shaft bearing unit bead (14) is configured to be longitudinally extended.

10. A steering column (3) for a motor vehicle with a bracket part (7) provided for fastening the steering column (3) to a body of the motor vehicle, which part has at least two side cheeks (15), **characterised in that** a steering-shaft bearing unit (1) according to one of Claims 1 to 9 is arranged with its fastening region (6) between the side cheeks (15) and is held on the side cheeks (15) by means of the fastening webs (8).

11. A method for the production of a steering-shaft bearing unit (1) according to one of Claims 1 to 9, **characterised in that** the jacket metal sheet (4) is formed from a one-piece metal sheet by shaping, preferably bending.

12. A method according to Claim 11, **characterised in that** following the forming, preferably bending, opposing end faces (16) of the one-piece metal sheet are connected together, preferably welded or caulked, to form the peripherally closed region (5).

13. A method for the production of a steering-shaft bearing unit (1) according to one of Claims I to 9, **characterised in that** the jacket metal sheet (4) is composed of, preferably welded from, a plurality of pre-shaped sheet-metal parts.

14. A method for the production of a steering-shaft bearing unit (1) according to one of Claims 1 to 9, **characterised in that** the jacket metal sheet (4) is produced from a peripherally closed tubular body **in that** a wall of the tubular body is cut open in the fastening region (6) and the freely projecting fastening webs (8) and the opening (9) delimited by the fastening webs (8) are formed by shaping, preferably bending, regions of the wall which are delimited by the cutting-open.

## Revendications

1. Unité de palier d'arbre de direction (1) pour le support rotatif d'un arbre de direction (2) d'une colonne de direction (3) pour un véhicule automobile, dans laquelle l'unité de palier d'arbre de direction (1) présente une tôle d'enveloppe (4), qui présente au moins une zone périphérique fermée (5) destinée à contenir au moins un palier pour le support rotatif de l'arbre de direction (2) et au moins une zone de fixation (6) pour la fixation de l'unité de palier d'arbre de direction (1) à une partie de console (7) de la colonne de direction (3), dans laquelle la tôle d'enveloppe (4) présente dans sa zone de fixation (6) une ouverture (9) limitée par au moins deux nervures de fixation (8) librement saillantes opposées l'une à l'autre, dans laquelle les nervures de fixation (8) font partie de la tôle d'enveloppe (4), et les nervures de fixation librement saillantes (8) de la tôle d'enveloppe (4) présentent respectivement au moins une ouverture de passage (12) pour l'introduction d'un boulon de serrage (13) de la colonne de direction (3), **caractérisée en ce qu'**au moins une des nervures de fixation (8), de préférence les deux, présente/-présentent au moins un collet de l'unité de palier d'arbre de direction (14), et **en ce que** l'ouverture de passage (12) destinée à l'introduction du boulon de serrage (12) est disposée dans le collet de l'unité de palier d'arbre de direction (14).

2. Unité de palier d'arbre de direction (1) selon la revendication 1, **caractérisée en ce que** les nervures de fixation (8) sont reliées l'une à l'autre au moyen d'une tôle de liaison séparée (11), de préférence à leurs extrémités librement saillantes (10).

3. Unité de palier d'arbre de direction (1) selon la revendication 2, **caractérisée en ce que** la tôle de liaison (11) présente une section transversale en forme de V.

4. Unité de palier d'arbre de direction (1) selon l'une quelconque des revendications 1 à 3, **caractérisée en ce que** la tôle d'enveloppe (4) est formée à partir d'une tôle en une seule pièce.

5. Unité de palier d'arbre de direction (1) selon l'une quelconque des revendications 1 à 3, **caractérisée en ce que** la tôle d'enveloppe (4) est composée de plusieurs parties de tôle, de préférence assemblées par soudage.

6. Unité de palier d'arbre de direction (1) selon l'une quelconque des revendications 1 à 5, **caractérisée en ce que** la tôle d'enveloppe (4) présente au moins deux zones périphériques fermées (5) destinées à contenir chacune au moins un palier pour le support rotatif de l'arbre de direction (2) et la zone de fixation (6) est disposée entre les zones périphériques fermées (5).

7. Unité de palier d'arbre de direction (1) selon l'une quelconque des revendications 1 à 6, **caractérisée en ce que** chacune des nervures de fixation librement saillantes (8) présente exactement un collet de l'unité de palier d'arbre de direction (14).

8. Unité de palier d'arbre de direction (1) selon l'une quelconque des revendications 1 à 7, **caractérisée en ce que** l'ouverture de passage (12) est disposée respectivement sur le fond de collet (29) du collet de l'unité de palier d'arbre de direction (14).

9. Unité de palier d'arbre de direction (1) selon l'une quelconque des revendications 1 à 8, **caractérisée en ce que** le collet de l'unité de palier d'arbre de direction (14) est réalisé sous forme allongée.

10. Colonne de direction (3) pour un véhicule automobile avec une partie de console (7) prévue pour la fixation de la colonne de direction (3) à une carrosserie du véhicule automobile, laquelle présente au moins deux joues latérales (15), **caractérisée en ce qu'**une unité de palier d'arbre de direction (1) selon l'une quelconque des revendications 1 à 9 est disposée avec sa zone de fixation (6) entre les joues latérales (15) et est maintenue sur les joues latérales (15) au moyen des nervures de fixation (8).

11. Procédé de fabrication d'une unité de palier d'arbre de direction (1) selon l'une quelconque des revendications 1 à 9, **caractérisé en ce que** l'on façonne la tôle d'enveloppe (4) à partir d'une tôle en une seule pièce par déformation, de préférence par cintrage.

12. Procédé selon la revendication 11, **caractérisé en ce que**, à la suite de la déformation, de préférence du cintrage, on assemble l'une à l'autre, de préférence par soudage ou matage, des faces frontales (16) opposées l'une à l'autre de la tôle en une seule pièce pour former la zone périphérique fermée (5).

13. Procédé de fabrication d'une unité de palier d'arbre de direction (1) selon l'une quelconque des revendications 1 à 9, **caractérisé en ce que** l'on compose, de préférence par soudage, la tôle d'enveloppe (4) à partir de plusieurs parties de tôle préformées.

14. Procédé de fabrication d'une unité de palier d'arbre de direction (1) selon l'une quelconque des revendications 1 à 9, **caractérisé en ce que** l'on fabrique la tôle d'enveloppe (4) à partir d'un corps tubulaire fermé en périphérie, par le fait que l'on découpe une paroi du corps tubulaire dans la zone de fixation (6) et on forme les nervures de fixation librement saillantes (8) et l'ouverture (9) limitée par les nervures de fixation (8) par déformation, de préférence par pliage, de zones de la paroi limitées par la découpe.
